# EUROPEAN PATENT APPLICATION

(11) **EP 4 528 352 A1**
(43) Date of publication of application: **26.03.2025**
(21) Application number: 23198634.0
(22) Date of filing: 20.09.2023
(51) Int. Cl.: G02B 21/36, G02B 27/58, G02B 21/24, G02B 21/26, G02B 21/14

(54) **INTERFEROMETRIC SCATTERING MICROSCOPE WITH A DRIFT STABILIZATION SYSTEM**

(71) Applicant: Ludwig-Maximilians-Universität München, 80539 München (DE)
(72) Inventor: GRUBER, Christoph, München (DE); GRÖBMEYER, Franz, München (DE); MANCINI, Andrea, München (DE); CORTES, Emiliano, München (DE); BELADI MOUSAVI, Mohsen, München (DE)
(74) Representative: Prinz & Partner mbB

(57) **Abstract**

The present invention refers to an interferometric scattering microscope (10) which comprises an optical system (12) that includes an objective (30) which is adapted to direct the illuminating light (22) onto the sample location and to collect output light (32), and a stage unit (36) which is adapted to adjust the focus of the objective (30), the stage unit (36) comprising a drift stabilization system (38) which is configured to stabilize an objective holding element (40) on which the objective (30) is mounted for a measurement. Further, a drift stabilization system (38) for an interferometric scattering microscope (10) is disclosed.

## Description

The present invention relates to an interferometric scattering microscope and a drift stabilization system for an interferometric scattering microscope.

Interferometric scattering microscopy (hereinafter referred to as iSCAT) is a technique which takes advantage of the interference between scattered light from a sample and the directly reflected light from a nearby interface to provide high-contrast, label-free images. In particular, iSCAT allows for real-time observations and can be operated under ambient conditions. The main focus of iSCAT lies in the analysis of single-particle tracking down to the single-molecule level.

The principle concepts of iSCAT have been published in several scientific journals, for example in "Detection and spectroscopy of gold nanoparticles using supercontinuum white light confocal microscopy", Physical Review Letters 2004, Volume 93, Number 3, and in "Direct optical sensing of single, unlabeled proteins and super-resolution imaging of their binding sites", Nature Communications 2014, 5, 4495.

Although iSCAT has shown promise in numerous applications, the microscope set-up being used for iSCAT is impaired by several limitations which hinder a commercial application of iSCAT. For example, iSCAT microscopes are typically custom build set-ups, featuring unconventional camera solutions and complex optical pathways. In most cases, iSCAT microscopes are designed and optimized to measure only one type of sample. Due to these drawbacks, it is often time-consuming and difficult to perform routine measurements with iSCAT microscopes.

One way to address the above-mentioned limitations is to modify the optical system used in iSCAT microscopes. In this respect, US 10,775,597 B2 discloses an interferometric scattering microscope having an arrangement of components which is similar to a conventional iSCAT microscope despite the difference of providing a spatial filter, which effects the output light. Specifically, the spatial filter passes the output light but with a reduction in intensity that is greater within a predetermined numerical aperture than the larger numerical apertures. As a result, the reduction in intensity by the spatial filter at low numerical apertures predominantly affects the illuminating light and has a minimal effect on the scattering light, thereby maximizing the imaging contrast.

Further, WO 2021 / 069 921 A1 discloses a method of imaging a sample by using interferometric scattering microscopy. In principle, it is suggested to split the backpropagating signal, which allows for two images of the sample from the same instant in time to be captured, and thus in turn allows the sample to be investigated without temporarily-dependent intensity fluctuations such as inconsistencies in the illuminating light source as introduced by the sequential image acquisitions. An iSCAT microscope capable of carrying out the above method has also been disclosed.

Moreover, US 10,816,784 B1 refers to a method for improving the resolution of iSCAT by accounting for heterogeneous reference beam characteristics. In addition, an iSCAT system has been proposed to carry out the above method.

Notwithstanding the above developments and improvements, iSCAT microscopes still suffer from stability issues which arise from bringing the sample into the focus of the objective. However, stability issues may also come from environmental influences or even system components used within the iSCAT microscope. Stability issues are the sum of all movements which can take place after the microscope is finally set up, i.e., after bringing the sample into the focus of the objective. The movements may be in the nanoscale region.

It is of significant importance to avoid stability issues and bring the microscope into a stable state in order to image an object. Particularly, the distance between the sample and the objective have to be stabilized such that the distance does not change over time. Otherwise the subsequent measurement is negatively affected by this varying distance i.e., lack of stability, which results in distorted data obtained from such measurements. In a worst-case scenario, the measurement cannot be carried out until sufficient stability is achieved. Specifically, stability issues significantly complicate visualization of minute phenomena on the sample surface and diminish potentially critical details or dynamic changes within the sample. One approach to overcome the lack of stability is to let the microscope equilibrate for a long period of time, e.g., days or weeks, after bringing the sample into focus and prior to the measurement. It goes without saying that this approach is not satisfactory.

In other words, to obtain a detailed view of the sample using an iSCAT microscope in top or bottom configuration, the iSCAT system has to be extremely stable before the measurement. While achieving stability of an iSCAT microscope is one key parameter for bottom illumination, stability particularly becomes important for top illumination and non-transparent samples since top illumination iSCAT microscopes, due the inherent nature of their set-up, are more unstable compared to iSCAT microscope using bottom illumination. Hence, examples of iSCAT microscopes using top illumination are extremely rare. One example is disclosed in US 10 488 328 B2.

So far, the stability issue of iSCAT systems has not been addressed.

Thus, it is an objective of the present invention to provide an interferometric scattering microscope that overcomes the above-mentioned stability issues of iSCAT microscopes of the prior art.

In a first aspect, the invention relates to an interferometric scattering microscope, the microscope comprising an optical system which provides an optical path that optically connects a sample holder for holding a sample in a sample location, an illumination source which is configured to provide illumination light, and a detector with each other. The optical system further includes an objective which is adapted to direct illuminating light onto the sample location and to collect output light, comprising both light scattering from the sample location and illuminating light reflected from the sample location, and to direct output light to the detector. The interferometric scattering microscope further comprises a stage unit which is adapted to adjust the focus of the objective, the stage unit comprising a drift stabilization system which is configured to stabilize an objective holding element on which the objective is mounted for a measurement. The interferometric scattering microscope is mounted in top- or bottom-configuration.

The core idea of the invention resides in the provision of a drift stabilization system to overcome the stability issues of an iSCAT microscope of the prior art. In particular, the inventors have surprisingly found that the main stability issue arises from the occurrence of drifts, i.e., dynamic signals such as vibrations, rather than from static signals caused by surface roughness or beam path impurities. However, while static signals may be filtered out from the obtained measurement data, drifts may turn static signals into dynamic intruders that interfere with the images, complicating the process of image capturing. Hence, drifts cannot be easily filtered out by processing the obtained data. Drifts or vibrations typically arise from nanoscale movements of the sample or other system components of the iSCAT microscope. The main source lies in the adjustment step prior to the measurement in which the distance "objective to sample" is varied to bring the sample into focus. Thus, it becomes a delicate balancing act of adjusting the objective-sample-distance, which is a necessary step to achieve different focus positions with the objective, while at the same time maintaining stability. The present invention addresses these drift stabilization issues by using a drift stabilization system which is stabilizing the objective holding element on which the objective is mounted for a measurement. In other words, the drift stabilization system also stabilizes the objective via the objective holding element prior to the measurement.

Moreover, the drift stabilization system provides the advantage that drifts such as noise and disturbances from environmental sources such as vibrations and gravitational drifts are diminished. Therefore, the present invention provides an interferometric scattering microscope with enhanced stability, sensitivity and adaptability.

The term "objective holding element" refers to an object which is adapted to connect the objective to the stage unit. In principle, the objective holding element is not limited and it may be any objective holding element which is adapted to couple the objective to the stage unit. Another function of the objective holding element is to provide an internal passage within the objective holding element for the optical path extending through the stage unit.

Preferably, the objective holding element is a tube, a pipe or any tubular shaped objective which can be connected to the objective. More preferably, the objective holding element has a threaded end to engage with a counter thread of the objective such that the objective and the tube can be coupled to each other.

According to a first embodiment of the invention, the drift stabilization system comprises a base block having a through-hole in which the objective holding element is slidably received, and at least one laterally actuating biasing mechanism which is attached to the base block and adapted to bias the objective holding element against an inner wall of the through-hole.

With the laterally actuating biasing mechanism the objective holding element can be biased by applying a lateral force such that the objective holding element and the base block are pressed together. The biasing action results in the holding element being pressed against the inner wall of the through-hole, thereby distributing the applied pressure uniformly between the inner wall of the through-hole and the objective holding element. Thus, accumulated points of force which would lead to drifts during and/or after equilibration and prior to the measurement are reduced. Hence, a high stability can be achieved after a comparably short amount of time.

Moreover, the above embodiment provides the advantage that the objective is moveable, i.e., adjustable. Thus, the focus of the objective can be easily adjusted by a vertical movement of the objective holding element along the through-hole in the base block. This considerably increases the usability of the interferometric scattering microscope.

In this respect, the term "slidably received" means that the objective holding element has a diameter which is tailored to fit the diameter of the through-hole for a snug fit such that the objective holding element does not slip out from the through hole, when the bias is released. Hence, the through-hole holds the objective holding element captive, wherein the biasing mechanism stabilizes a vertical position of the objective holding element once a position is set. In particular, the vertical position of the objective holding element can be altered over a centimeter range using the through-hole in the base block. The vertical adjustment of the objective holding element allows a coarse adjustment of the focus which ensures a fast adjustment of the microscope prior to a measurement.

Further, the base block serves as a stabilizing element. It is therefore preferred to use a metal base block due to high thermal conductivity which ensures a fast thermal equilibrium of the single components in the stage unit after adjusting the focus and applying the bias. In addition, the use of a base block minimizes the occurrence of drifts if the objective holding element is pressed against said base block.

According to a preferred embodiment, the biasing mechanism comprises a locking element which is linearly guided in the base block and which is adapted to adjust the bias.

Using a locking element to adjust the bias provides the advantage that the required pressure equilibration can be altered, e.g., adjusted as desired. To achieve a "drift stabilization", the objective holding element is first placed in a position within the through-hole to bring the sample into focus. Afterwards, the locking element is tightened, thereby providing a bias onto the objective holding element which is pressed against the inner wall of the through-hole. Although this process invariably leads to some short-time drifts after the biasing due to material pressure equilibration, the use of a locking element within the biasing mechanism significantly reduces both drift magnitude and duration in short and long-term view. Hence, the practicability of the interferometric scattering microscope is significantly enhanced.

For example, the locking element may be a screw, a bolt, a pin, a block, a platelet or a spring.

In another preferred embodiment, the locking element has a guiding section with which it is guided linearly in the base block, and a contact nose extending from the guiding section and which can press laterally against the objective holding element.

By using a guiding section, the locking element can easily engage with the base block. For example, the guiding section may be an elongated part of the locking element having a smooth surface with which the locking element can slide linearly within the base block. However, the guiding section may alternatively be equipped with a profiled surface, e.g., a groove or a thread such that the guiding section is adapted to interact with a counter profiled surface of the base block. Preferably, the guiding section predetermines the linear movement direction of the locking element within the base block.

The presence of a contact nose is advantageous for limiting the force-transmitting part of the locking element to a specific area. Hence, the bias applied by the biasing mechanism onto the objective holding element is confined solely to the contact nose, thereby allowing a precise force transmission onto the objective holding element.

The contact nose may have a shape being different from the shape of the guiding section. For example, the contact nose may form a tip of the locking element. But in principle, the shape of the contact nose is not limited and it may be any shape which is adapted to punctually transmit a force onto the objective holding element.

According to another preferred embodiment, the guiding section is received within a recess of the base block which extends along the movement direction of the biasing mechanism and orthogonal to the through-hole.

The above arrangement allows to apply in an easy manner a lateral bias onto the objective holding element. A lateral bias is particularly preferred because the applied bias can be uniformly distributed from the objective holding element to the inner wall of the through-hole and further onto the base block.

Further, the above arrangement allows the locking element to fixate the objective holding element within the through-hole in a simple manner by blocking the vertical movement of said objective holding element. Hence, the biasing mechanism features two advantages, namely to reduce the occurrence of drifts after placing the sample into focus and to limit the vertical movement of the objective holding element by which the focus of the objective is maintained in its position.

According to another preferred embodiment, the contact nose is made of or coated within a softer material than the objective holding element and/or the guiding section of the locking element. In particular, the softer material is selected from the group consisting of rubber; textile, preferably nylon; metal, preferably copper; and metal alloys.

The softer material provides the advantage that the pressure, i.e., bias, applied by the locking element onto the objective holding element is evenly distributed. This minimizes the risk of a drastic pressure increase between the locking element and the objective holding element.

Preferably, the locking element is a screw with a tip as a contact nose, wherein the tip is coated with or the tip is made of a nylon cap. The tip of the screw having a nylon cap may have a length in the range of 0.8 to 1.6 mm. The screw may have a total length in the range of 4 to 25 mm.

In another preferred embodiment, the objective holding element has a groove to engage with the locking element, in particular, the groove extending orthogonally to the movement direction of the biasing mechanism and along the optical path running through the objective holding element.

The provision of a groove which is disposed at an outer side of the objective holding element allows the locking element to engage with the groove. Since the groove extends orthogonally to the movement direction of the biasing mechanism and along the optical path running through the objective holding element, the locking element hinders a twisting of the objective holding element inside the through-hole once the locking element is engaged with the groove. This improves the fixation of the objective holding element inside the base block and reduces the amount of drifts arising from a twisting of the objective holding element over time.

According to another preferred embodiment, the locking element has at least one section with a plate-like shape matching the profile of the groove, or the biasing mechanism comprises a slot nut matching the profile of the groove, the slot nut being arranged between the objective holding element and the locking element. In particular, the slot nut has an alignment geometry in the form of a protrusion or a recess to engage with a counter alignment geometry of the inner wall of the through-hole.

The principle idea behind the above embodiment is to provide a section of the locking element or an additional object such as a slut nut with an enlarged size, i.e., enlarged cross-sectional area, compared to the remaining part of the locking element and which can engage with the groove of the objective holding element. By doing so, the at least one section with the plate-like shape or the slot nut can snuggly fit into the groove which effectively prevents a twisting of the objective holding element inside the through-hole. Furthermore, the pressure applied on the objective holding element can be homogeneously distributed due to the enlarged cross-sectional area of the at least one section with the plate-like shape or the slot nut. Hence, the stabilization of the objective can be further enhanced.

In order to prevent the slot nut from being tilted between the objective holding element and the locking element, an alignment geometry can be employed in the form of protrusions or recesses. For example, the slot nut may be equipped with protrusions, preferably two protrusions in the form of pins, which may engage into corresponding recesses of the inner wall of the through-hole, thereby stabilizing and/or securing the position of the slot nut during the application of bias from the biasing mechanism. In addition, the objective holding element may further be vertical shifted along the through-hole for adjustment purposes without tilting the slut nut.

According to another preferred embodiment, the biasing mechanism comprises a clamping element with an opening in which the objective holding element is slidably received and a locking element attached thereto which is adapted to adjust the size and/or shape of the opening, in particular, the clamping element at least partially encompassing the parameter of the objective holding element.

By using a clamping element, the objective holding element can be vertically fixed in a specific position after the sample is brought into focus by shifting the objective holding element and the objective attached thereto along the through-hole. Further, the clamping element can be fixed by the locking element attached thereto, which exerts a force on the objective holding element during fastening by reducing the diameter of the opening, thereby achieving a lower occurrence of drifts. In particular, the clamping element provides a robust, long-term fixation of the objective holding element. Although there may be a slight initial increase in short-term drift due to the strength of the clamping element, the drift is significantly reduced in the long term. In contrast to the above described biasing mechanism which applies a linear bias onto the objective holding element, the clamping element offers the advantage of applying a bias along the perimeter of the objective holding element which enables a more homogenous force transmission. The locking element which is attached to the clamping element may be a screw, a bolt, a pin, a block, a platelet or a spring.

The clamping element may be any kind of clamp which is adapted to at least partially surround the perimeter of the objective holding element. Preferably, the clamping element completely surrounds the objective holding element.

According to another preferred embodiment, the clamping element is attached to the base block and assigned to the opening of the through-hole facing away from the sample holder.

By placing the clamping element on the side of the base block which faces away from the sample holder it is ensured that the operator can easily access the clamping element for adjusting the bias applied onto the objective holding element. Moreover, by attaching the clamping element to the base block, the objective holding element is not only attached securely by the clamping element, but also to the base block. This measure ensures a very stable connection between the objective holding element, the clamping element and the base block which results in less drifts.

For example, the clamping element may be connected via screws, bolts, a weld seam or an adhesive joint to the base block.

According to another preferred embodiment, the clamping element comprises at least one free cut. Preferably the clamping element comprises two, three or more free cuts.

The free cuts can be disposed along the outer perimeter of the clamping element and allow the clamping element to be more flexible. Thus, due to the provision of free cuts, the clamping element can be more easily bent towards the opening such that less force has to be applied on the locking element to alter the diameter and/or the shape of the opening.

According to another preferred embodiment, the biasing mechanism comprises an actuator which is force-transmittingly connected to the objective holding element and signal-transmittingly connected to a control unit, wherein the control unit is adapted to send command signals to the actuator to control a vertical and/or a horizontal movement of the actuator.

Due to the actuator, the objective holding element can be easily moved up and down allowing a fast adjustment of the distance between the objective and the sample. Further, the actuator may be moved horizontally which allows to press the objective holding element against an inner wall of the through-hole, thereby reducing the occurrence of drifts. The actuator offers particularly a short-term and immediate stability without equilibrium drift. However, the long-term stability is less compared to the above introduced biasing mechanisms.

For example, the actuator may be a motorized translation stage.

Preferably, the motorized translation stage has a range of movement of several millimeters down to 30 nm increments.

More preferably, the actuator may be equipped with a locking element, which blocks a movement of the actuator and applies a bias thereto. The provision of a locking element in the actuator allows for an immediate stability without equilibrium drift. The locking element may be a screw, a bolt, a pin, a block, a platelet or a spring.

According to another preferred embodiment, the actuator is mounted on a coupling element having a recess in which the objective holding element is held in a loss-proof manner, in particular, the coupling element being L-shaped.

Using a coupling element allows for a very precise movement of the objective holding element. This is because the movement of the objective holding element can be guided by the coupling element which transmits the applied force of the actuator directly onto the objective holding element. Further, the L-shape of the coupling element allows to integrate the actuator in a space-saving manner between the objective holding element and the base block.

According to another preferred embodiment, the actuator is attached to the base block via a bridging element, in particular, the bridging element being L-shaped.

The bridging element serves as a mechanical connector to attach the actuator to the base block. Coupling the actuator to the base block reduces the amount of components being involved in the set-up. Hence, factors which may lead to drifts can be reduced. Further, the L-shape of the bridging element allows to integrate the actuator in a space-saving manner onto the base block.

According to a second aspect of the invention, the invention relates to a drift stabilization system for an interferometric scattering microscope, the interferometric scattering microscope comprising an optical system which provides an optical path that optically connects a sample holder for holding a sample in a sample location, an illumination source which is configured to provide illuminating light, and a detector with each other. The optical system includes an objective which is adapted to direct illuminating light onto the sample location and to collect output light, comprising both light scattering from the sample location and illuminating light reflected from the sample location, and to direct the output light to the detector. Further, the interferometric scattering microscope comprises a stage unit which is adapted to adjust a focus of the objective, the stage unit being configured to include the drift stabilization system, wherein the drift stabilization system is configured to stabilize an objective holding element on which the objective is mounted for a measurement. The interferometric scattering microscope is mounted in top- or bottom-configuration.

The drift stabilization system according to the invention allows to reduce the occurrence of drifts after bringing the sample into focus prior to the measurement. Regarding further advantages, reference is made to the above description of the first aspect which also applies to the second aspect.

A further invention, which is closely related to the above invention on the one hand, but to be distinguished from the above invention on the other hand and which is regarded as a second independent invention refers to an interferometric scattering microscope.

It is a need in science and industry to study various chemical reactions on the nanoscale level. However, the study of these processes under actual working conditions and with the real, industrially relevant samples using iSCAT is highly limited. Among others, the majority of the relevant materials in material science are non-transparent, and are not able to be investigated with the typical iSCAT detection scheme.

It is therefore an objection of the second invention to provide an iSCAT microscope which overcomes the aforementioned problem.

The iSCAT microscope according to the second invention comprises an optical system which provides an optical path that optically connects a holder for holding a sample in a sample location, an illumination source which is configured to provide illuminating light, and the detector with each other. The optical system further includes an objective which is adapted to direct the illuminating light onto the sample location and to collect output light, comprising both light scattering from the sample location and illuminating light reflected from the sample location, and to direct the output light to the detector. The interferometric scattering microscope further comprises a stage unit which comprises the sample holder, wherein the stage unit is adapted to adjust a focus of the objective, and wherein the interferometric scattering microscope comprises an electrochemical analysis unit which is coupled to the sample holder. The electrochemical analysis unit comprises a reaction chamber which is accommodated inside a housing, the reaction chamber comprising an electrode set-up which is adapted to carry out electrochemical experiments within the reaction chamber, wherein the electrochemical analysis unit is mounted in top- or bottom-configuration.

The second invention can be combined with the above-mentioned aspects and embodiments of the first invention arbitrarily. With regard to the definitions and advantages of the above-mentioned features, reference is made to the above-mentioned description which applies to the second invention as well. The drift stabilization system according to the first invention allows to study various electrochemical processes carried out with the iSCAT microscopy in more detail because drift can be avoided. This applies especially to an iSCAT microscope configured in the top-illumination configuration.

The concept behind the second invention is to introduce an electrochemical analysis unit in the interferometric scattering microscope in order to carry out electrochemical experiments and to monitor these experiments at the same time using the iSCAT microscope. Hence, the proposed set-up allows to observe and control electrochemical reaction mechanisms and pathways at resolutions in a nanoscale level. In other words, the combination of the electrochemical analysis unit and the optical system of the iSCAT microscope allows to study electrochemical processes in operando, e.g., during an electrochemical reaction taking place at the surface of the substrate. Further, the implementation of the reaction chamber is a convenient way to handle electrochemical processes in a defined space without contaminating or interfering with the optical elements of the iSCAT microscope.

In particular, the feature "carry out electrochemical experiments" is defined herein as to induce a chemical reaction of a sample attached to a substrate or of the substrate itself upon applying electrical current or potential. The chemical reaction may either be reversible or irreversible. In the latter case, the sample or the substrate may feature permeant change of its material properties, e.g., structural modification of the substrate, sample or the creation of specific products from the sample or the substrate such as evolving gas bubbles or particulate matter.

For example, the following electrochemical experiments can be carried out within the reaction chamber:
- Cyclic voltammetry (CV), by altering the potential cyclically, it is possible to study redox activity and capacitive processes;
- Chronoamperometry, by applying a constant potential, the resulting current during a period of time is recorded;
- Chronopotentiometry, a constant current is applied, and the potential change during a period of time is measured;
- Impedance spectroscopy, this technique gauges the impedance of the substrate of a range of frequencies, giving insight into charge transfer processes and the properties of the electrode/electrolyte interface; and
- Electrodeposition, which refers to an electrochemical process where materials, typically metals or semiconductors, are deposited onto a substrate by the reduction of cations from a solution, driven by an applied potential.

The above-mentioned electrochemical experiments can be monitored in real-time and investigated with the optical system of the iSCAT microscope. This allows to gain a deeper understanding into mechanisms of electrochemical processes.

According to a preferred embodiment, the housing comprising a connection wall, wherein the connection wall or at least one portion of the connection wall has a fastening element which connects the housing to the stage unit, in particular, the fasting element connecting the housing to the sample holder. With the above means, the electrochemical analysis unit can be easily connected to the stage unit. Preferably, the fastening element can be connected in a non-destructively manner. For example, the fastening elements may be screws or a snap-in mechanism such as a bayonet closure.

According to another preferred embodiment, the connection wall has an opening which is assigned to the sample holder, wherein the opening is sealed by a substrate which is mounted between the sample holder and the connection wall, and wherein the substrate provides a reaction surface which faces towards the reaction chamber, the reaction surface being coated with or made of an electrical conducting material.

In other words, the substrate fulfills two different functions, namely to separate the electrochemical analysis unit and the stage unit from each other and to provide an electrical conducting surface at the same time on which electrochemical processes can take place. In operating mode of the electrochemical analysis unit, the substrate acts as a working electrode. The electrochemical material can be any electrical conducting material or semi-conducting material. In particular, the electrical conducting material is made from FTO (fluorine doped tin oxide) or ITO (indium tin oxide).

Preferably, the substrate and/or the sample may be transparent or non-transparent. More preferably, the substrate may have a transmission in the range of 0.1% to 95%, in particular, in the range of 0.1% to 30%, in the visible part of the spectrum (380 nanometers to 740 nanometers), wherein the transparency is measured with UV-Vis-NIR spectroscopy. Even more preferably, the substrate is non-transparent, e.g., having a transmission in the range of 0.1% to 10%.

According to another preferred embodiment, the opening has a circular shape. A circular shape of the opening is of advantage, because a circular shape can be easily sealed by the substrate on the one side, and on the other side a circular shape allows a homogenous illumination of the substrate without having light distorted at corners of the opening.

In another preferred embodiment, the sample holder or at least a portion of the sample holder surrounding the opening is a funnel, wherein the funnel tapers from the stage unit towards the opening. This allows an easy and damage-free connection to the objective with can engage into the funnel.

According to another preferred embodiment, a connector is disposed between the connection wall and the stage unit, wherein the connector electrically connects the substrate to a potentiostat.

A potentiostat is measurement device to carry out electrochemical experiments. Therefore, the electrochemical analysis unit is compatible with standard set-ups used for studying electrochemical processes on substrate surfaces, which increases the versatility. However, a power supply other than a potentiostat may be used that is suitable for applying a current or potential. The potentiostat or the power supply ensures a control over electrochemical reactions by generating and maintaining specific potentials or currents. Depending on the substrate and/or the sample, the introduced potential or current can lead to notable structural or morphological alterations, such as phase transitions, defect formations, or changes in molecular or atomic arrangements. Beyond these physical changes, the potentiostat's electrical input can also instigate various electrochemical reactions either directly at the substrate's surface or within the neighboring electrolyte. These reactions can range from oxidation-reduction (redox) processes to the evolution or absorption of gaseous products, or even material deposition or dissolution. Furthermore, the system offers the flexibility to either modulate these reactions, facilitating reversible transformations, or drive them irreversibly to completion.

According to another preferred embodiment, the connector is a foil made from a metal or an alloy, preferably the foil is made from a metal which is selected from the group consisting of iron, copper, aluminum, gold, stainless steel, nickel or silver. The herein listed materials guarantee a good electrical contact between the connector and the potentiostat.

According to another preferred embodiment, the electrode set-up is connected with the potentiostat. In this kind of electrode set-up, the substrate serves as a working electrode, wherein in the electrode set-up, a reference electrode and a counter electrode is provided. This electrode set-up is also known as three-electrode set-up. Alternatively, the electrode set-up may be a two-electrode set-up, wherein merely a working electrode and a counter electrode are used, which are coupled electrically to the potentiostat, respectively. Similar to the three-electrode set-up, the substrate is used as the working electrode.

In another preferred embodiment, a sealing element is disposed between the sample holder and the connection wall, in particular, the sealing element is disposed between the substrate and the connection wall. Preferably, the sealing element encircles the opening in a closed, frame-like manner, wherein the sealing element provides a fluid tight connection between the substrate and the connection wall such that no electrolyte solution inside the reaction chamber leaks out.

According to another preferred embodiment, the electrode set-up comprises a reference electrode and a counter electrode, the reference electrode and the counter electrode being disposed within the reaction chamber, wherein the substrate is adapted to be the working electrode. The above described set-up enables to carry out a wide range of different electrochemical experiments.

According to another preferred embodiment, the housing completely encloses the reaction chamber. This provides the advantage that no exchange of gaseous components can escape the reaction chamber. For example, the reaction chamber inside the housing may be filled with a protective atmosphere such as nitrogen or argon atmosphere.

According to another preferred embodiment, the housing is adapted to host an electrolyte solution. For example, the housing may be made from stainless steel or another inert material such as plastic.

According to another preferred embodiment, the sample holder provides a recess for accommodating the substrate in a loss-proof manner.

Using the recess, the substrate can be placed in a predetermined position in the sample holder, before the sample holder, e.g., the stage unit is connected with the electrochemical analysis unit.

According to another preferred embodiment, the electrochemical analysis unit comprises a heating unit which is adapted to adjust an electrolyte solution within the reaction chamber to a predetermined temperature. The heating unit is able to deliver a predetermined temperature to the electrolyte disposed within the reaction chamber for electrochemical experiments. Hence, the electrochemical experiments can be carried out under controlled conditions.

According to another preferred embodiment, the electrochemical analysis unit comprises a light source with controllable wavelength which is adapted to illuminate the sample location.

The above mentioned embodiment allows to measure photo-electrochemical processes. In particular, introducing light into the electrochemical analysis unit facilitates photo-electrochemical reactions taking place on the substrate. For example, the light source may be the same for operating the microscope, or an additional light source may be used. So to say, the electrochemical analysis unit turns then into a photo-electrochemical cell, which can be used to study photoactive properties of materials on the substrate.

In particular, the potentiostat or the power supply may be coupled to a control and processing unit such as a computer system to control the electrochemical experiments.

The invention further relates to a method for performing electrochemical experiments using the optical system and the electrochemical analysis unit of the aforementioned iSCAT microscope. Said method comprises the following steps:
a) Providing a sample to be measured, wherein the sample is placed in the sample holder, the sample being a substrate or a solid matter disposed on the substrate;
b) Applying an electrical bias to the sample resulting in the generation of permanent or non-permanent changes, thereby measuring electric signals, the electrical bias being a potential or a current adapted to induce an electrochemical reaction at the sample;
c) Illuminating the sample with the illumination source, thereby obtaining scattering signals;
d) Analyzing scattering signals and electric signals in dependence on the electrochemical experiment which is carried out.

Preferably, during step a), the sample which is placed on the substrate is connected electronically to the potentiostat, e.g., via metal tape or a conducting polymer from which the sample holder base is made. More preferably, the sample holder is placed on top of the microscope.

Preferably, between steps a) and b), the electrochemical analysis unit is coupled to the sample holder. In particular, the reaction chamber is coupled to the sample holder. More preferably, the electrochemical analysis unit is already preassembled
Preferably, the electrical bias in step b) is generated from a power supply, preferably a potentiostat.

Optionally, steps b) and c) are carried out in parallel. Alternatively, step b) is carried out before and during step c).

Preferably, during step d), a statistical analysis is carried out to visualize different electrochemical processes, e.g., a gaseous species created by the electrochemical reaction. Regarding the electrochemical experiment which is analyzed in step d), reference is made to the above description.

In the following, the first and second inventions will be described in detail by making reference to the annexed drawings, in which
- Figure 1 is a scheme of an interferometric scattering microscope with a stage unit with a drift stabilization system according to the invention;
- Figure 2 is a side view onto the stage unit with the drift stabilization system from Figure 1, the drift stabilization system comprising a first, a second and a third biasing mechanism, the stage unit being in bottom-configuration;
- Figure 3 is a side view onto the stage unit from Figure 1, the stage unit being in top-configuration and showing the details A, B and C;
- Figure 4 is a top view of detail A of Figure 3, the detail A comprising the first biasing mechanism;
- Figure 5 is a cross-sectional view along the cross-section A-A from Figure 4 showing the first biasing mechanism;
- Figures 6A to Figures 6C are different isometric views depicting the first biasing mechanism in more detail;
- Figure 7 is a top-down view onto the detail B from Figure 3, the detail B highlighting the second biasing mechanism;
- Figure 8 is a cross-sectional view along the cross-section B-B from Figure 7, the cross-sectional view showing the second biasing mechanism;
- Figure 9 is a top view onto the detail C from Figure 3; the detail C highlighting the third biasing mechanism;
- Figure 10 is a cross-sectional view along the cross-section C-C from Figure 9, the cross-sectional view depicting the third biasing mechanism;
- Figure 11 is a side view onto the stage unit from Figure 1, the stage unit being coupled to an electrochemical analysis unit, the electrochemical analysis unit showing Detail D; and
- Figure 12 is an isometric top view of detail D from Figure 11, the detail D highlighting a sample holder from Figure 11 which may be coupled to a reaction chamber of the electrochemical analysis unit from Figure 11.

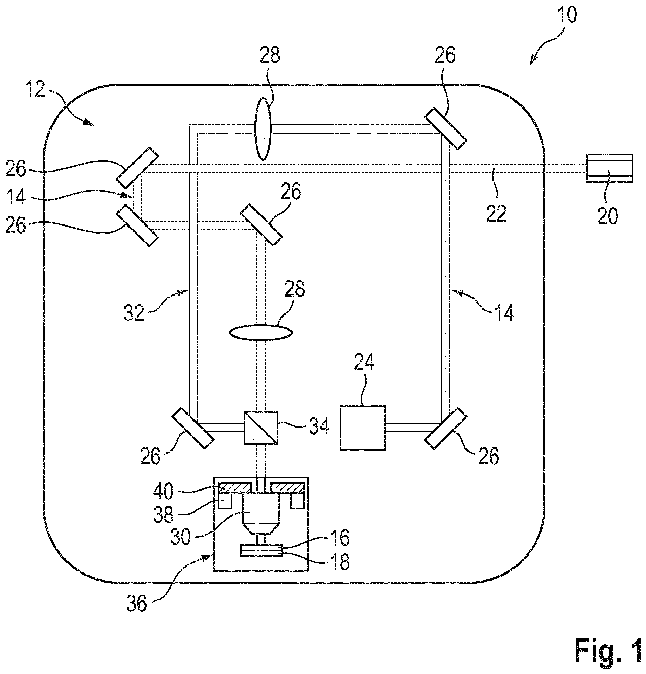

Figure 1 depicts an interferometric scattering microscope 10 according to the invention.

The interferometric scattering microscope 10 comprises an optical system 12 which provides an optical path 14 that optically connects a sample holder 16 for holding a sample 18 in a sample location, an illumination source 20 which is configured to provide illuminating light 22, and a detector 24 with each other.

The sample 18 may be a liquid sample comprising objects to be imaged.

Objects which can be imaged with the interferometric scattering microscope 10 may be selected from the group consisting of single particles; preferably nanoparticles, more preferably nanoparticles immobilized on the substrate; nano-regions within a film, preferably films with nanometer thickness; nano-regions within a device, preferably a solar cell or a battery; nano-regions within a substrate and proteins.

Typically, the sample holder 16 holds the sample 18 on a surface which forms an interface between the sample holder 16 and the sample 18.

The illumination source 20 is arranged to provide illuminating light 22. For example, the illuminating light 22 may be coherent light or circular polarized light. In particular, the illumination source 20 may be a laser. Typically, the wavelength and the intensity of the illuminating light 22 are selected in dependence of the sample 18 to be imaged. Preferably, the illuminating light 22 which may be used is ultraviolet light (which may be defined herein as having wavelength in the range from 10 nanometers to 380 nanometers); visible light (which may be defined herein as having wavelength in the range from 380 nanometers to 740 nanometers); infrared light (which may be defined herein as having wavelength in the range from 740 nanometers to 300 micrometers). It is also possible, that the illuminating light 22 may be a mixture of the aforementioned wavelengths.

The detector 24 is arranged to receive light from the sample location. The detector 24 may be a CMOS detector (complementary metal-oxide-semiconductor) image sensor or a CCD (charge-coupled device).

In order to guide the illuminating light 22 from the illumination source 20 to the sample location and from the sample location to the detector 24, the optical system 12 further includes a plurality of adjustable mirrors 26 which are arranged between the sample location, the illumination source 20 and the detector 24 to provide the optical path 14.

Further, the optical system 12 comprises at least two focusing lenses 28 which are arranged along the optical path 14. In particular, the optical system 12 comprises a condenser lens which condenses illuminating light 22 from the illuminating source 20 onto the sample 18 and a tube lens which focuses the light from the sample onto the detector 24.

In addition, the optical system 12 includes an objective 30 which is adapted to direct the illuminating light 22 onto the sample location and to collect output light 32, comprising both light scattering from the sample location and illuminating light reflected from the sample location, and to direct the output light 32 to the detector 24. Hence, the principle of interferometric scattering microscopy 10 is that the scattered light from the objects at or close to the surface of the sample 18 constructively interfere with the reflected light which results in an image of the object captured by the detector 24.

The illuminating light which is reflected from the sample location is predominantly reflected from the interface between the sample holder 16 and the sample 18.

For example, the interface may be a glass-water interface.

In particular, the intensity of the reflected illuminating light may be in the order of 0.5 % of the intensity of the incident illuminating light 22. The scattered light is scattered by the objects to be imaged in the sample 18.

Further, the optical system 12 comprises a beam splitter 34 which is adapted to split the optical path 14 of the illuminating light 22 from the output light 32 and to guide the output light 32 via adjustable mirrors 26 to the detector 24. Typically, the beam splitter 34 allows partial reflection and partial transmission of the incident light thereon, thereby allowing to split the incident light from the backpropagating light into two different optical paths.

For example, the beam splitter 34 may be a plate, typically provided with a film, which may be metallic or dielectric, arranged at 45° angle with respect to the optical path 14. Alternatively, the beam splitter 34 may be a cube beam splitter formed by a plurality of prisms having a partially reflecting film at the interface between the prisms.

Further, the interferometric scattering microscope 10 comprises a stage unit 36 which is adapted to adjust the focus of the objective 30.

The stage unit 36 includes a drift stabilization system 38 which is configured to stabilize an objective holding element 40 on which the objective 30 is mounted for a measurement.

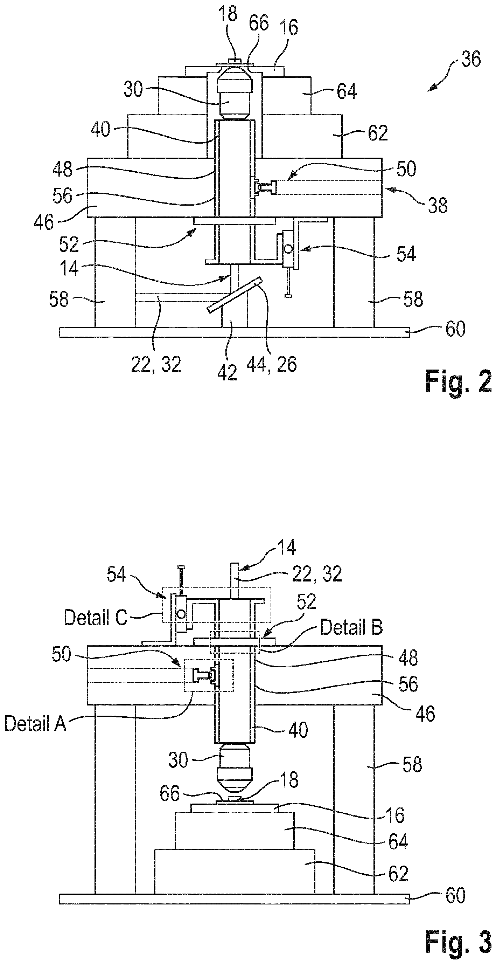

Figure 2 depicts the stage unit 36 in more detail in a bottom-configuration.

The optical path 14 along which both, the output light 32 and the illuminating light 22 is running, comes from the lower left side and is guided onto one of the adjustable mirrors 26 which is arranged on a stage holding pillar 42. In particular, the adjustable mirror 26 is a 45° mirror 44 which reflects both illuminating light 22 and output light 32 in a 90° angle.

Typically, the stage holding pillar 42 and the 45° mirror 44 are arranged at the bottom of the stage unit 36.

From the mirror 44, the optical path 14 runs vertically upwards through a base block 46, the base block 46 having a through-hole 48 in which the objective holding element 40 is slidably received. The through-hole 48 together with the objective holding element 40 allows the optical path 14 to pass the base block 46. For this reason, the objective holding element 40 is hollow, enabling the optical path 14 to extend therethrough.

In fact, the base block 46 is a massive block made from a metal or an alloy. For example, the base block 46 may be made from aluminum or stainless steel.

The through-hole 48 connects the lower side of the base block to the upper side without discontinuities. In fact, the through-hole 48 has a cylindrical shape, particularly a circular cylindrical shape.

The objective holding element 40 is arranged to hold the objective 30. For example, the objective holding element 40 may be a hollow cylinder, e.g., a tube or a pipe, with a circular cross-section which has a one-sided thread which can be engaged with a counter thread disposed on the objective 30 such that the objective 30 and the thread of the objecting holding element 40 can be coupled to each other.

In the given embodiments, the objective holding element 40 is an objective holding tube having a circular cross-section.

The inner side of the objective holding element 40 may be coated with or made of an alloy which is adapted to equilibrate temperature changes of the stage unit 36. For example, the alloy may be brass.

Typically, the objective holding element 40 has a diameter which is adapted to snugly fit into the through-hole 48. Since the objective holding element 40 is slidably received within the through-hole 48, the objective 30 is also slidably received and can be vertically moved along the direction of the optical path 14 such that the focus of the objective 30 can be adjusted by sliding the objective holding element 40 within or along the through-hole 48.

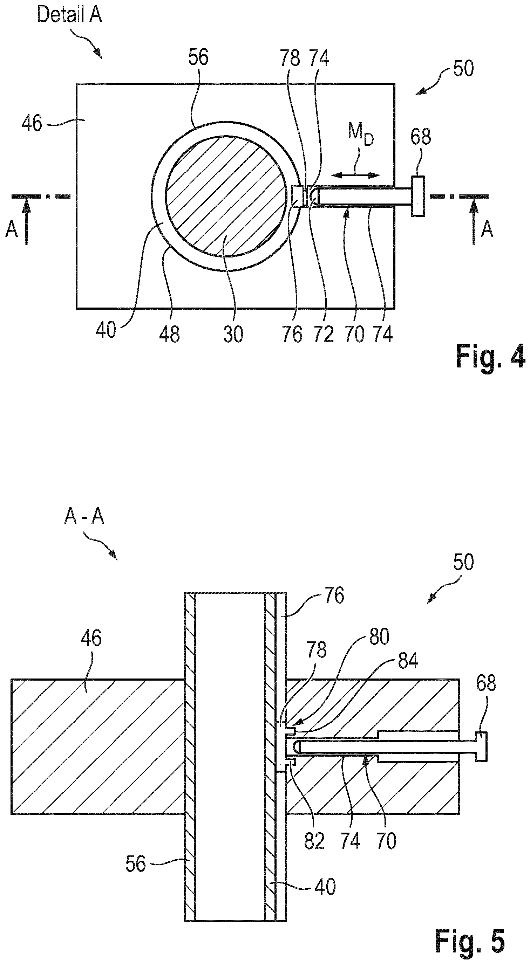

As it can be seen from Figure 4, for example, the shape of the through-hole 48 matches the shape of the objective holding element 40.

At least one laterally actuating biasing mechanism is attached to the base block 46 and adapted to bias the objective holding element 40 against an inner wall 56 of the through-hole 48.

In the embodiment shown in Figure 2, the inner wall 56 has a cylindrical shape and completely encloses the perimeter of the objective holding element 40.

In fact, Figure 2 depicts a first biasing mechanism 50, a second biasing mechanism 52 and a third biasing mechanism 54. In the following, the aforementioned biasing mechanisms 50, 52, 54 are explained in more detail. However, it should be noted that only one of the biasing mechanisms 50, 52, 54 may be used in the drift stabilization system 38. But it may also be, that all three biasing mechanisms 50, 52 and 54 are used in the drift stabilization system 38. Further, it may also be that only two biasing mechanisms of the three biasing mechanisms 50, 52, 54 are used in combination in the drift stabilization system 38. It may also be that two first biasing mechanisms 50 or two second biasing mechanisms 52 or two third biasing mechanisms 54 may be used in combination in the drift stabilization system 38. In this respect, the invention is not limited.

To arrange the stage unit 36 within the optical system 12, the base block 46 is mounted on at least one support element 58, which is coupled to an optical table 60.

Following the optical path 14 through the objective holding element 40 received within the through-hole 48 of the base block 46, the optical path 14 runs further through the objective 30 and from there onto the sample 18 which is placed on the sample holder 16 in a sample location.

The sample holder 16 is mounted on a xy-stage 62 which is adapted to move the sample holder 16 with respect to the base block 46 in a xy-plane which is aligned orthogonal to the optical path 14.

In detail, between the xy-stage 62 and the sample holder 16, a piezo stage 64 is disposed, said piezo stage 64 being configured to arrange the sample holder 16 with respect to the base block 46 along a vertical direction being aligned parallel to the optical path 14. In particular, the piezo stage 64 is adapted to carry out fine-adjustments of the sample holder 16 by using nanometer increments for moving the sample holder 16.

Further, the sample holder 16 is configured to provide a substrate 66, for example, a cover glass slip on which the sample 18 may be arranged. However, it may also be that the substrate 66 actually resembles the sample 18 to be measured.

While Figure 2 depicts the stage unit 36, and hence the interferometric scattering microscope 10, in a bottom-configuration, Figure 3 depicts the interferometric scattering microscope 10 and the stage unit 36 in a top-configuration.

Thus, Figure 3 shows the same components as described above in Figure 2, despite the difference that the optical path 14 extends from the top onto the sample 18 rather than from the bottom onto the sample 18. The difference between both configurations is that the top-configuration is much more unstable compared to the bottom-configuration. Hence, top-configuration tends to have more drifts after bringing the sample 18 into focus, which makes it more difficult to adjust the focus in such set-ups.

Next, the first biasing mechanism 50 (detail A) is described in more detail by taking a closer view at Fig. 4.

The first biasing mechanism 50 comprises a locking element 68 which is linearly guided in the base block 46 and which is adapted to adjust the bias. In the embodiment shown in Figure 3, the locking element 68 is a screw.

In particular, the locking element 68 has a guiding section 70 with which it is guided linearly in the base block 46. For example, the guiding section 70 may be a shaft of the screw having a thread which can interact with a counter thread of the base block 46.

Further, the locking element 68 has a contact nose 72 extending from the guiding section 70 and which can press laterally against the objective holding element 40. In the embodiment shown in Figures 4 and 5, it can be seen that the contact nose 72 is in fact the tip of the screw.

Further, the contact nose 72 may taper towards its free end. Alternatively, the contact nose 72 may be flattened at its free end.

The contact nose 72 is made of or coated with a softer material than the objective holding element 40 and/or the guiding section 70 of the locking element 68. In particular, the softer material is selected from the group consisting of rubber, textile, preferably nylon, metal, preferably copper, or metal alloys.

According to the embodiments relating to the first biasing mechanism shown in Figures 4 and 5, the locking element 68 is a screw with a thread, whereas the tip of the screw is the contact nose 72. However, the locking element 68 can also be a spring or a bolt which is adapted to laterally bias the objective holding element 40 against the inner wall 56 of the through-hole 48.

As it can be seen from Figure 5, the guiding section 70 protrudes from a recess 74 of the base block 46 which extends along the movement direction of the biasing mechanism 50 and along the running direction of the optical path 14. For example, the recess 74 may be a through-hole which leads into the through-hole 48 at right angle. However, in may also be that the guiding section 70 is completely received within the recess 74 of the base block 46 (not shown).

In particular, the recess 74 may be equipped with a thread such that the guiding section 70 of the locking element 68 can be guided linearly along the recess 74 by turning the locking element 68 clockwise or anticlockwise.

The objective holding element 40 has a groove 76 to engage with the locking element 68, which can be seen in Figure 5. In particular, the groove 76 extends orthogonally to the movement direction of the biasing mechanism 50 and along the optical path 14.

Preferably, the groove 76 extends along the entire length of the objective holding element 40. For example, the objective holding element 40 may be a hollow tube having a circular cross-section, wherein the outer side of the objective holding element 40 has the groove 76 which basically extends from one side of the objective holding element 40 to the other side of the objective holding element 40.

In particular, the groove 76 has a profile which matches the profile of the contact nose 72 of the locking element 68.

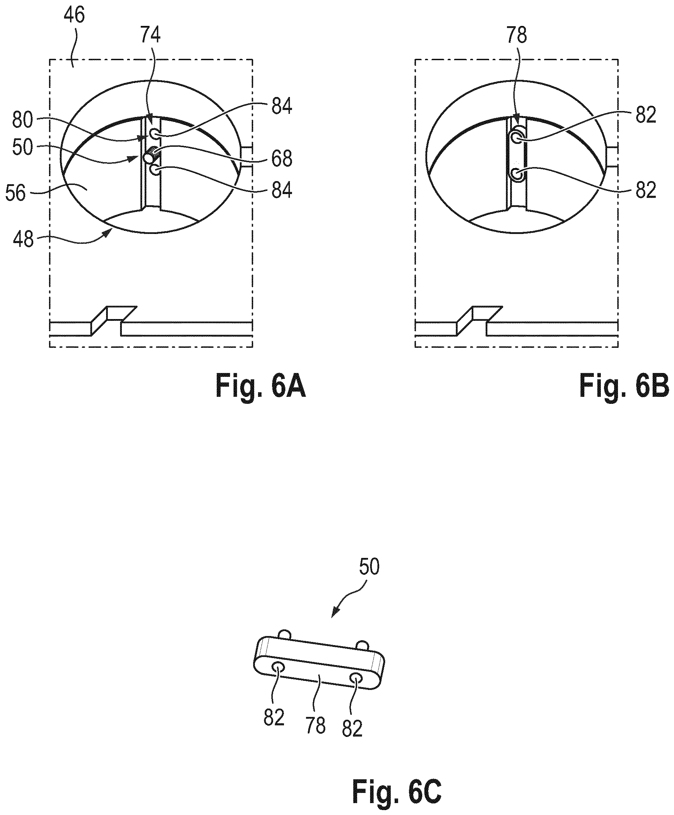

More preferably, the locking element 68 has at least one section with a plate-like shape matching the profile of the groove 76. Alternatively, the biasing mechanism 50 comprises a slot nut 78 matching the profile of the groove 76, the slot nut 78 being arranged between the objective holding element 40 and the locking element 68. This can be seen in Figure 6A and 6B.

Taking a look on Figure 6C, the slot nut 78 has an alignment geometry 80 in the form of two protrusions 82 which are configured to engage with a counter alignment geometry of the inner wall 56 of the through-hole 48. In this case, the counter alignment geometry are two counter-recesses 84 which are arranged to receive the two protrusions 82 from the slot nut 78. Thus, the slot nut 78 can be captively held by the inner wall 56 of the through-hole 48.

In the following, detail B from Figure 3, which refers to the second biasing mechanism 52, is discussed in more detail.

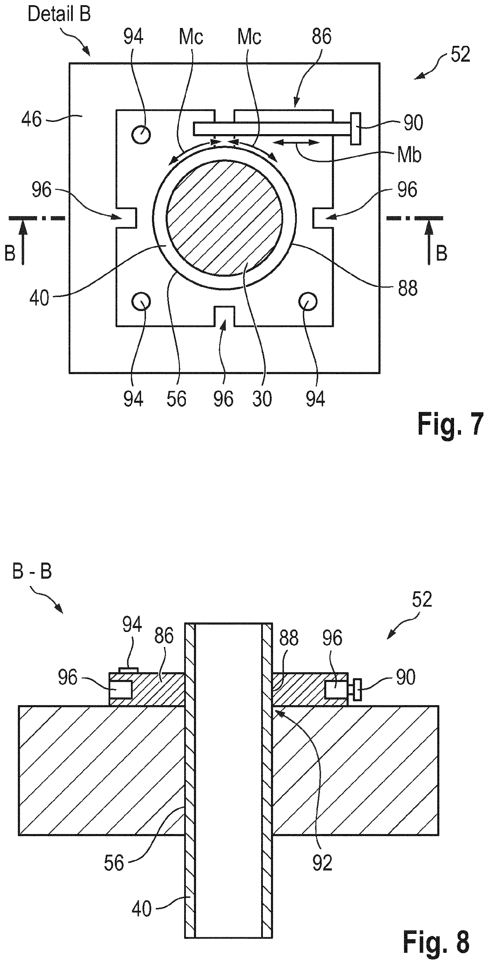

Figure 7 shows a top view of the second biasing mechanism 52.

The second biasing mechanism 52 comprises a clamping element 86 with an opening 88 in which the objective holding element 40 is slidably received. Further, a locking element 90 is attached to the clamping element 86 which is adapted to adjust the size and/or the shape of the opening 88. in particular, the clamping element 86 at least partially encompasses the parameter of the objective holding element 40.

As it can be seen from the cross-section of Figure 8, the clamping element 86 is attached to the base block 46 via a plurality of fastening elements 94. Typically, the clamping element 86 is fastened to the base block 46 via screws, bolts, a weld seam or an adhesive joint.

Further, the clamping element 86 is assigned to the opening 92, which faces away from the sample holder 16. Hence, the second biasing mechanism 52 can be mounted at the stage unit 36 in a space-saving manner.

In particular, the clamping element 86 comprises in total three free cuts 96 which are disposed in the outer parameter of the clamping element 86. For example, the free cut 96 may be in the shape of a right angle.

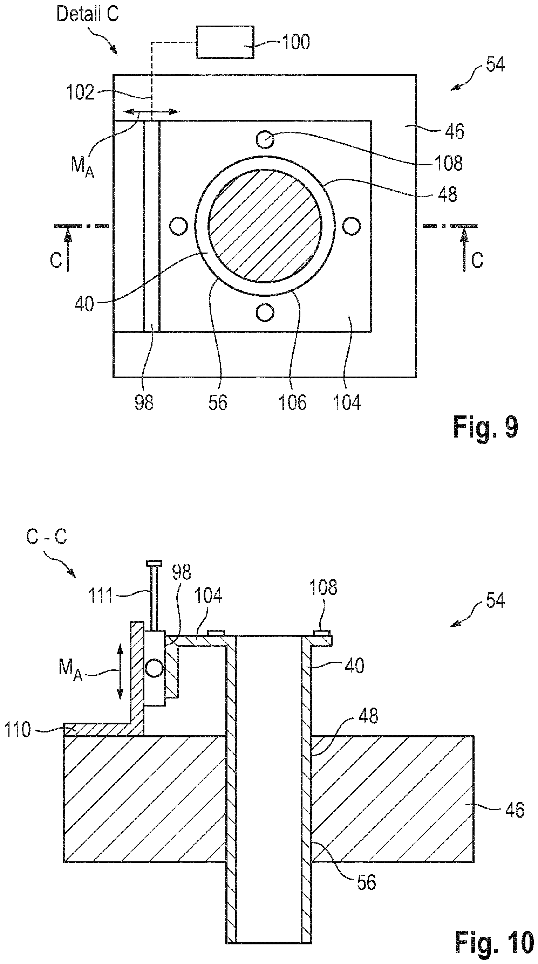

Next, detail C referring to the third biasing mechanism 54 is discussed in more detail. The third biasing mechanism 54 is shown in Figures 9 and 10.

In detail, the third biasing mechanism 54 comprises an actuator 98 which is force-transmittingly connected to the objective holding element 40.

Further, the third biasing mechanism 54 is signal-transmittingly connected to a control unit 100, wherein the control unit 100 is adapted to send command signals to the actuator 98 to control a vertical end or horizontal movement of the actuator via a cable 102. A computer may be used as the control unit 100 to command the actuator 98.

The actuator 98 is mounted on a coupling element 104 having a recess 106 in which the objective holding element 40 is captively held. In particular, the coupling element 104 is L-shaped.

For example, the coupling element 104 has a plurality of fastening elements 108. e.g., screws, bolts, seam welds or adhesive joints to securely position the objective holding element 40 within the recess 106. Preferably, the recess 106 has the same shape as the perimeter of the objective holding element 40. In particular, the recess 106 has a circular cross-section having a diameter to snuggly fit the objective holding tube 40.

The actuator 98 is attached to the base block 46 via a bridging element 110. In particular, the bridging element 110 is L-shaped.

The actuator 98 may be used to execute vertical movements such that the objective holding element 40 performs a vertical movement, too. By doing so, the focus of the objective 30 can be easily adjusted.

Further, the actuator 98 can also perform a horizontal movement such that the objective holding element 40 is laterally pressed against the inner wall 56 of the through-hole 48. In other words, the actuator 98 may be used to achieve a fast and easy adjustment of the focus of the objective 30.

However, the actuator 98 can also be a motorized vertical translation stage such that the actuator merely carries out vertical movements. However, such an actuator 98 may also be adapted to bias the objective holding element 40 against the inner wall 56 of the through-hole 48. For this purpose, the actuator 98 is equipped with a locking element 111 which upon tightening blocks any movement of the actuator 98 and applies a bias onto the actuator 98 such that the objective holding element 40 is laterally pressed against the through-hole 48. For example, the actuator 98 may first be vertically moved to adjust the focus, i.e., by altering the sample 18 - objective 30 distance, and subsequently fixed by fastening the locking element 111. The bias of the locking element 111 reduces the occurrence of drifts.

As discussed above, the stage unit 36 may be equipped with a drift stabilization system 38 comprising all three biasing mechanisms 50, 52, 54. In this respect, the first and the second biasing mechanism 50, 52 may be used for medium-term measurements. However, for short-term measurements, it is advised to solely rely on tightening the locking element 111 of the actuator 98 for biasing. To carry out long-term measurements, it is suggested to employ all three biasing mechanisms 50, 52, 54 for optimal drift stabilization. Notwithstanding the above, employing all biasing mechanisms 50, 52, 54 may initially result in more drift, once an equilibrium is achieved, the combination of all three biasing mechanisms ensures the least long-term drift. In contrast, using only one of the aforementioned biasing mechanisms may result in a quick equilibrium time for measurement but may lead to increased long-term drift. Hence, the number and the combination of the aforementioned biasing mechanisms have to be chosen by the operator based on the desired imaging process.

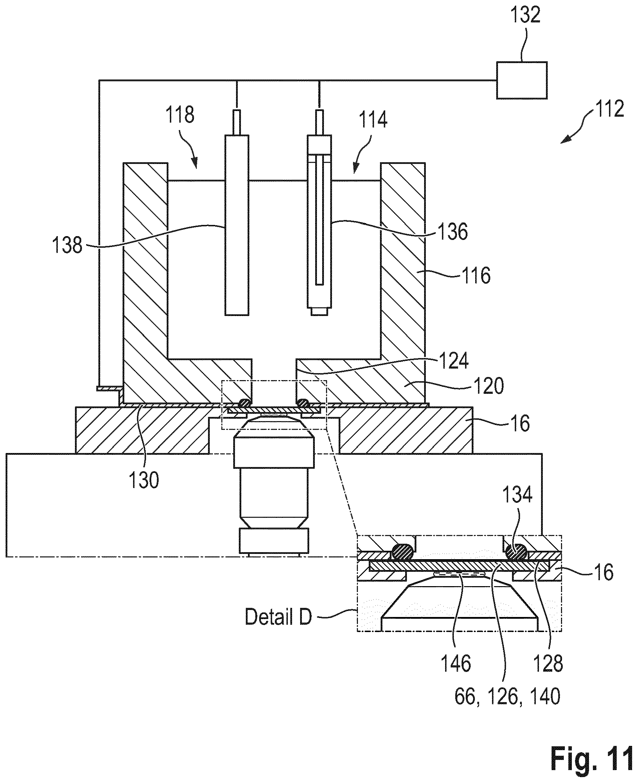

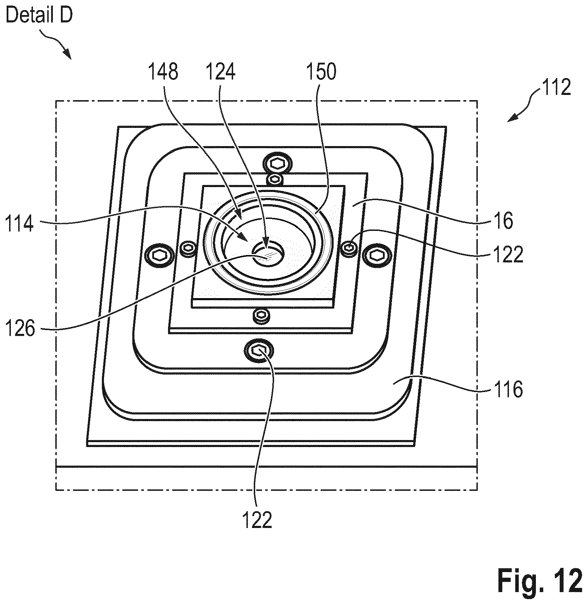

In the following, a further embodiment of the interferometric scattering microscope 10 is discussed. The embodiment shown in Figure 11 comprises an electrochemical analysis unit 112 which is coupled to the sample holder 16. The embodiment shown in Figures 11 and 12 may be combined with the above embodiments shown in Figures 1 - 10, i.e., the drift the stabilization system 36.

The electrochemical analysis unit 112 comprises a reaction chamber 114 which is accommodated inside a housing 116.

The reaction chamber 114 comprises an electrode set-up 118 which is adapted to carry out electrochemical experiments within the reaction chamber 114.

In detail, Figure 11 depicts the electrochemical analysis unit 112 in bottom-configuration. However, the electrochemical analysis unit 112 may also be employed in top-configuration which is shown in Figure 12.

As it can be seen from Figure 11, the housing 116 comprises a connection wall 120, which resembles the bottom of the reaction chamber 114. From the connection wall 120 at least one side wall extends which encircles the reaction chamber 114 such that a pot-shaped housing 116 is obtained which may be filled with an electrolyte solution.

The electrochemical analysis unit 112 may be equipped with a lid or a cover (not shown) to close the housing 116. If no such lid is provided, the reaction chamber 114 can exchange with the surrounding environment.

Further, the connection wall 120 or at least one portion of that connection wall 120 has a fastening element 122 which connects the housing 116 to the sample holder 16. As it can be seen from Figure 12, the sample holder 16 may have four screws with which the sample holder 16 is connected to the housing 116.

In order to illuminate the sample 18, the connection wall 120 has an opening 124 which is assigned to the sample holder 16, wherein the opening 124 is sealed by a substrate 126 which is mounted on the sample holder 16. Particularly, the opening 124 has a circular shape.

The substrate 126 is arranged between the connection wall 120 and the sample holder 16 as it can be seen in Figure 10.

In fact, the substrate 126 equals the substrate 66 mentioned in the aforementioned embodiments. However, in contrast to the previously mentioned embodiments, the substrate 126 provides a reaction surface 128 which faces towards the reaction chamber 114, the reaction surface 128 being coated with or made of an electrical conducting material, for example, ITO or FTO.

In order to connect the reaction surface 128 to an electrical source, a connector 130 is provided which is arranged between the connection wall 120 and the sample holder 16, the connector 130 being electrically connected to the reaction surface 128 of the substrate 126. For example, the connector 130 may be an electrical conducting foil, a wire or a metal plate.

Preferably, the connector 130 is a foil made from a metal or an alloy, preferably the foil is made from a metal which is selected from the group consisting of iron, copper, aluminum, gold, stainless steel, nickel or silver. More preferably, the connector 130 is a copper tape.

The electrical source may be a potentiostat 132 which is either connected to the electrode set-up 118 and to the reaction surface 128 of the substrate 126.

In order to prevent the leakage of electrolyte solution from the reaction chamber 114, a sealing element 134 is arranged between the substrate 126 and the connection wall 120, in particular, the sealing element 134 encircling the opening 124 in a closed, frame-like manner. The sealing element 134 may be elastic. For example, the sealing element 134 may be made from rubber.

The electrode set-up 118 comprises a reference electrode 136 and a counter electrode 138, the reference electrode 136 and the counter electrode 138 being disposed within the reaction chamber 114, wherein the substrate 126 is adapted to be the working electrode 140.

In particular, the housing 116 is adapted to host an electrolyte solution 142. The composition of the electrolyte solution 142 depends on the electrochemical experiments carried out. The electrolyte solution 142 may be aqueous or be based on an organic solution.

In particular, the electrode set-up 118, comprising the reference electrode 136 and the counter electrode 138, is dipped into the electrolyte solution 142 if the electrochemical analysis unit 112 is switched to an operating mode. This can be seen in Figure 11. From each electrode, an electrode connection 144 extends to connect the respective electrode to the potentiostat 132.

To further increase the capturing of light, in particular, the output light 32 from the sample location, a drop of immersion oil 146 may be placed underneath the substrate 126 and the objective 30.

The above-described set-up of the electrochemical analysis unit 112 shown in Figure 11 is set up to be in a bottom-configuration. However, the electrochemical analysis unit 112 may also be placed in a top-configuration.

The electrochemical analysis unit 112 being placed in a top-down configuration is depicted in Figure 12.

In principle, the electrochemical analysis unit 112 depicted in Figure 12 is the electrochemical analysis unit 112 from Figure 11, but turned around by 180°.

Figure 12 shows detail D which refers to an isometric view onto the side of the sample holder 16 that can be engaged with the objective 30. Thus, the sample holder 30 is equipped with a docking geometry 148 surrounding the opening 124, the docking geometry 148 extending towards the substrate 126 and the reaction surface 128 disposed thereon.

The substrate 126 can also be the reaction surface; especially for non-transparent substrate for which top-illumination is preferred.

The docking geometry 148 is adapted to receive partially the objective 30 such that the objective 30 can be placed in the closest distance possible with respect to the substrate 126. As shown in Figure 12, the docking geometry 148 may be a funnel which tapers towards the sample 18. In order to avoid that the objective 30 physically contacts the substrate 126, a damping element 150 is disposed onto the sample holder 16. In fact, the damping element 150 has a ring shape surrounding the docking geometry 148 and the opening 124 placed therein.

However, it may also be that the objective 30 is not in direct contact with the damping element 150 and is kept in close distance therefrom. For example, the objective 30 may be hold by the objective holding element 40 in some distance from the substrate 126.

The damping element 150 may be made from an elastic material such as rubber.

It may also be that the electrochemical analysis unit 112 is placed in top-down configuration, hence, the electrochemical analysis unit 112 has the same configuration as shown in Figure 11, but the objective 30 is placed above the electrolyte solution 142 and not below as shown in Figure 11 (not shown here). In this top configuration, the objective 30 may be immersed directly into the electrolyte solution or be kept in a distance from the surface of the electrolyte solution. Regarding the first option of immersing, i.e., dipping the objective 30 into the electrolyte solution 142, the objective 30 is selected to be an immersion objective.

The electrode-set up may be arranged around the objective 30, if the objective 30 is dipped into the electrolyte solution 142.

## Claims

1. An interferometric scattering microscope (10), comprising
an optical system (12) which provides an optical path (14) that optically connects a sample holder (16) for holding a sample (18) in a sample location, an illumination source (20) which is configured to provide illuminating light (22), and a detector (24) with each other,
wherein the optical system (12) further includes an objective (30) which is adapted to direct the illuminating light (22) onto the sample location and to collect output light (32), comprising both light scattering from the sample location and illuminating light reflected from the sample location, and to direct the output light (32) to the detector (24), and
a stage unit (36) which is adapted to adjust the focus of the objective (30), the stage unit (36) comprising a drift stabilization system (38) which is configured to stabilize an objective holding element (40) on which the objective (30) is mounted for a measurement, and wherein
the interferometric scattering microscope (10) is mounted in top- or bottom-configuration.

2. The interferometric scattering microscope (10) according to claim 1, wherein the drift stabilization system (38) comprises a base block (46) having a through hole (48) in which the objective holding element (40) is slidably received, and at least one laterally actuating biasing mechanism (50) which is attached to the base block (46) and adapted to bias the objective holding element (40) against an inner wall (56) of the through-hole (48).

3. The interferometric scattering microscope (10) according to claim 2, wherein the biasing mechanism (50) comprises a locking element (68) which is linearly guided in the base block (46) and which is adapted to adjust the bias.

4. The interferometric scattering microscope (10) according to claim 3, wherein the locking element (68) has a guiding section (70) with which it is guided linearly in the base block (46), and a contact nose (72) extending from the guiding section (70) and which can press laterally against the objective holding element (40).

5. The interferometric scattering microscope (10) according to claim 4, wherein the guiding section (70) is received within a recess (74) of the base block (46) which extends along the movement direction of the biasing mechanism (50) and orthogonal to the through-hole (48).

6. The interferometric scattering microscope (10) according to claim 4 or 5, wherein the contact nose (72) is made of or coated with a softer material than the objective holding element (40) and/or the guiding section (70) of the locking element (68), in particular, the softer material being selected from the group consisting of rubber; textile, preferably nylon; metal, preferably copper and metal alloys.

7. The interferometric scattering microscope (10) according to any one of claims 3 to 6, wherein the objective holding element (40) has a groove (76) to engage with the locking element (68), in particular, the groove (76) extending orthogonally to the movement direction of the biasing mechanism (50) and along the optical path (14) running through the objective holding element (40).

8. The interferometric scattering microscope (10) according to claim 7, wherein the locking element (68) has at least one section with a plate-like shape matching the profile of the groove, or the biasing mechanism (50) comprises a slot nut (78) matching the profile of the groove (76), the slut nut (78) being arranged between the objective holding element (40) and the locking element (68),
in particular, the slot nut (78) having an alignment geometry (80) in the form of a protrusion (82) or recess to engage with a counter alignment geometry of the inner wall (56) of the through-hole (48).

9. The interferometric scattering microscope (10) according to any one of claims 2 to 8, wherein the biasing mechanism (52) comprises a clamping element (86) with an opening (88) in which the objective holding element (40) is slidably received and a locking element (90) attached thereto which is adapted to adjust the size and/or shape of the opening (88), in particular, the clamping element (86) at least partially encompassing the perimeter of the objective holding element (40).

10. The interferometric scattering microscope (10) according claim 9, wherein the clamping element (86) is attached to the base block (46) and assigned to the opening (88) of the through-hole (48) facing away from the sample holder (16).

11. The interferometric scattering microscope (10) according claim 9 or 10, wherein the clamping element (86) comprises at least one free-cut (96), preferably the clamping element (86) comprising two, three or more free-cuts (96).

12. The interferometric scattering microscope (10) according to any one of claims 2 to 11, wherein the biasing mechanism (54) comprises an actuator (98) which is force-transmittingly connected to the objective holding element (40) and signal-transmittingly connected to a control unit (100), wherein the control unit (100) is adapted to send command signals to the actuator (98) to control a vertical and/or horizontal movement of the actuator (98).

13. The interferometric scattering microscope (10) according to claim 12, wherein the actuator (98) is mounted on a coupling element (104) having a recess (106) in which the objective holding element (40) is accommodated in a loss-proof manner, in particular, the coupling element (104) being L-shaped.

14. The interferometric scattering microscope (10) according to claim 12 or 13, wherein the actuator (98) is attached to the base block (46) via a bridging element (110), in particular, the bridging element (110) being L-shaped.

15. A drift stabilization system (38) for an interferometric scattering microscope (10), the interferometric scattering microscope (10) comprising
an optical system (12) which provides an optical path (14) that optically connects a sample holder (16) for holding a sample (18) in a sample location, an illumination source (20) which is configured to provide illuminating light (22), and a detector (24) with each other,
wherein the optical system (12) further includes an objective (30) which is adapted to direct the illuminating light (22) onto the sample location and to collect output light (32), comprising both light scattering from the sample location and illuminating light reflected from the sample location, and to direct the output light (32) to the detector (24), and
a stage unit (36) which is adapted to adjust the focus of the objective (30), the stage unit (36) being configured to include the drift stabilization system (38),
wherein the drift stabilization system (38) is configured to stabilize an objective holding element (40) on which an objective (30) is mounted for a measurement, and wherein
the interferometric scattering microscope (10) is mounted in top- or bottom-configuration.
